# EUROPEAN PATENT APPLICATION

(11) **EP 4 773 348 A1**
(43) Date of publication of application: **08.07.2026**
(21) Application number: 25861218.3
(22) Date of filing: 08.08.2025
(51) Int. Cl.: H01M 10/6568, H01M 10/613, H01M 10/625, F16L 37/12, H01M 50/249

(54) **BATTERY PACK**

(30) Priority: 29.08.2024 KR 20240116993
(71) Applicant: LG Energy Solution, Ltd., Seoul 07335 (KR)
(72) Inventor: PARK, Sung-Kyu, Daejeon 34122 (KR)
(74) Representative: Goddar, Heinz J.
(86) International application number: PCT/KR2025/012057
(87) International publication number: WO 2026/049356

(57) **Abstract**

Disclosed is a battery pack. The battery pack includes a first battery module having a first port; a second battery module located at one side of the first battery module and having a second port; and a pipe assembly configured to communicate the first port and the second port, wherein the pipe assembly includes a holder coupled to an outer surface of the first port and having a through hole; a first connector passing through the through hole and inserted into the first port; and a fixing member configured to fix the holder to the first connector.

## Description

### TECHNICAL FIELD

The present disclosure relates to a battery pack.

The present application claims priority to Korean Patent Application No. 10-2024-0116993 filed on August 29, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a plurality of secondary batteries (battery cells) or a plurality of battery modules are densely packed in a narrow space, they may be vulnerable to thermal events. In particular, if an event such as thermal runaway occurs in a single battery cell, high-temperature gas, flame, heat, etc. may be generated. If such gas, flame, heat, etc. are transmitted to other battery cells within the same battery module, an explosive chain reaction such as thermal propagation may occur. In addition, such a chain reaction may not only cause an accident such as a fire or explosion in the corresponding battery module, but may also cause fire or explosion in other battery modules.

Therefore, it is necessary to effectively cool the battery cell to suppress thermal events or heat propagation of the battery cell.

### DISCLOSURE

### Technical Problem

Therefore, the present disclosure is designed to solve the problems of the related art.

The present disclosure may also be directed to providing a structure that facilitates connection to a cooling port of a battery module.

The present disclosure may also be directed to providing a structure that does not require a large space to connect a cooling port of a battery module.

The present disclosure may also be directed to increasing the energy density of a battery pack.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a first battery module having a first port; a second battery module located at one side of the first battery module and having a second port; and a pipe assembly configured to communicate the first port and the second port, wherein the pipe assembly includes a holder coupled to an outer surface of the first port and having a through hole; a first connector passing through the through hole and inserted into the first port; and a fixing member configured to fix the holder to the first connector.

In addition, the holder may have a hook, and the holder and the first port may be hook-coupled.

In addition, the first connector may have a first fixing groove provided on an outer surface thereof, and the holder may have a second fixing groove provided on an outer surface thereof and facing the first fixing groove.

In addition, the fixing member may be inserted into the first fixing groove and the second fixing groove.

In addition, the pipe assembly may include a second connector coupled to the second port; and a connection pipe configured to communicate the second connector and the first connector.

In addition, the first connector may include an insert portion inserted into the first port; and a connection portion communicating with the connection pipe, and the first fixing groove may be located between the insert portion and the connection portion.

In addition, the connection pipe may be configured as a corrugated tubing.

In addition, the second connector and the connection pipe may be formed as one piece.

In addition, the first connector may further include a sealing ring provided on an outer surface of the insert portion.

In another aspect of the present disclosure, there is also provided a vehicle, comprising the battery pack according to the present disclosure.

### Advantageous Effects

According to at least one embodiment of the present disclosure, the cooling port of a battery module may be easily connected.

According to at least one embodiment of the present disclosure, the cooling port of a battery module may be connected even with a small space.

According to at least one embodiment of the present disclosure, the energy density of a battery pack may be increased.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack of FIG. 1.
FIG. 3 is an exploded view showing a portion of the battery pack of FIG. 2.
FIG. 4 is a drawing showing a pipe assembly of FIG. 3.
FIG. 5 is an exploded view showing a portion of the pipe assembly of FIG. 4.
FIG. 6 is a drawing showing the movement of a holder of the pipe assembly of FIG. 3.
FIG. 7 is a drawing showing the coupling of the first battery module and the pipe assembly.
FIG. 8 is a drawing showing the installation of a second battery module.
FIG. 9 is a drawing showing the coupling of the second battery module and the pipe assembly.
FIG. 10 is a drawing showing the coupling of the first battery module and the holder.
FIG. 11 is a drawing showing the coupling of a first connector and the holder.
FIG. 12 is an enlarged drawing showing the pipe assembly.
FIG. 13 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

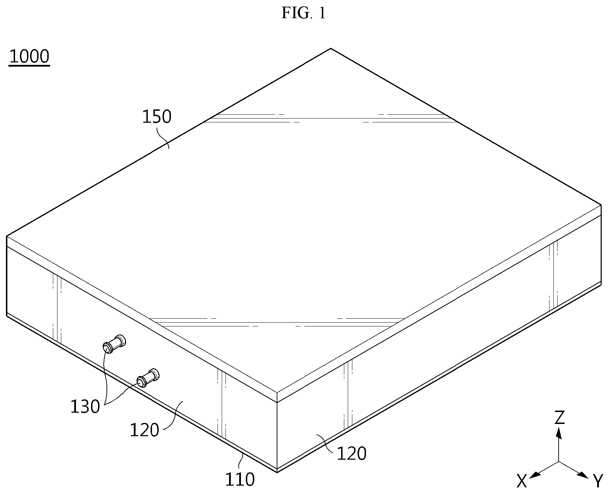

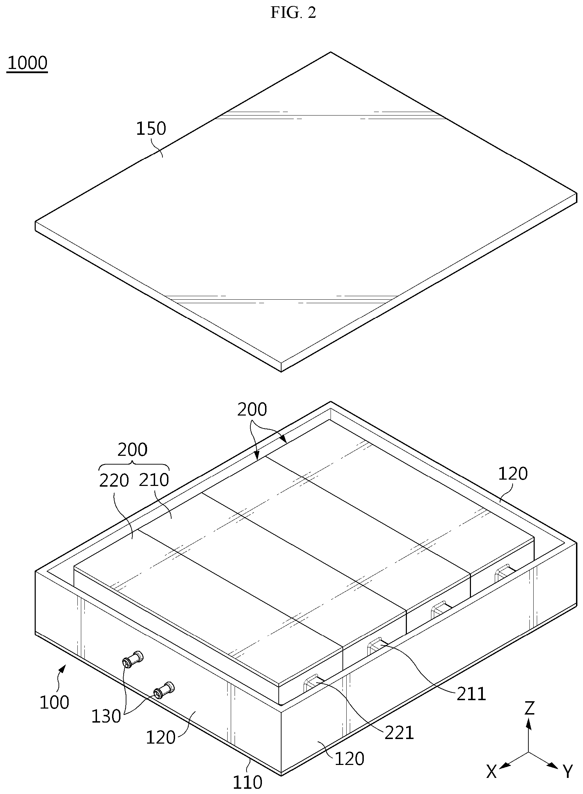

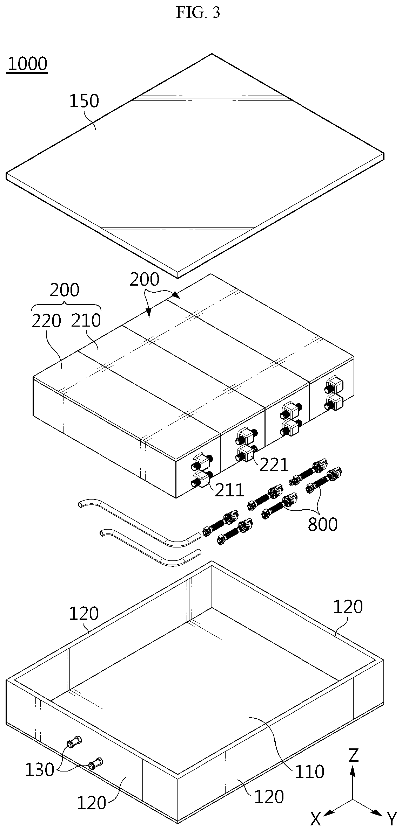

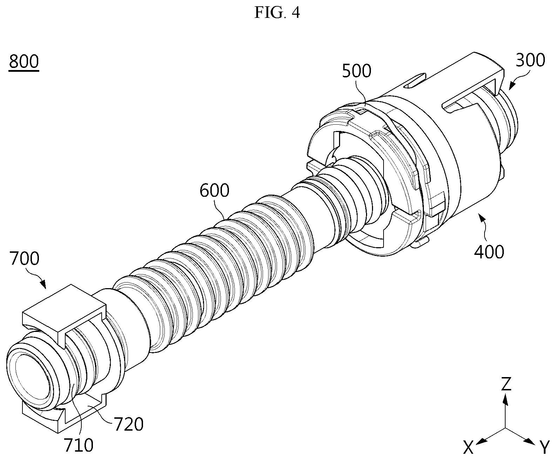

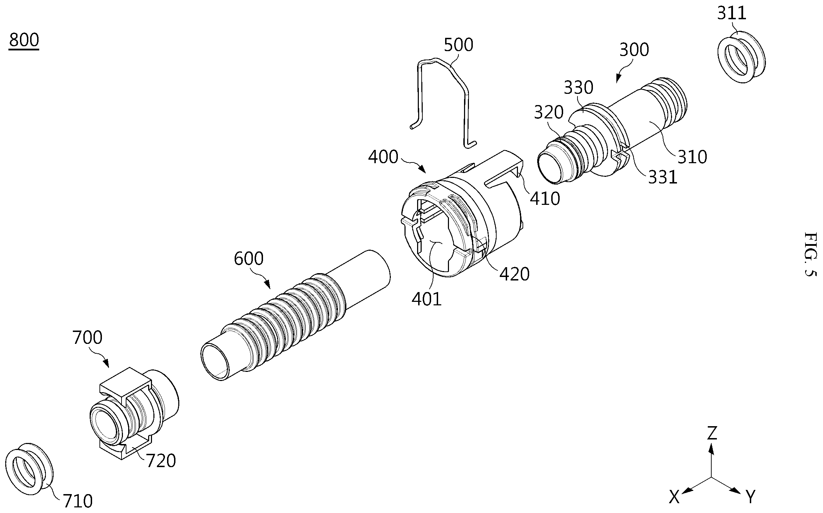

FIG. 1 is a diagram showing a battery pack 1000 according to an embodiment of the present disclosure. FIG. 2 is an exploded view showing some components of the battery pack 1000 of FIG. 1. FIG. 3 is an exploded view showing a portion of the battery pack 1000 of FIG. 2. FIG. 4 is a drawing showing a pipe assembly 800 of FIG. 3. FIG. 5 is an exploded view showing a portion of the pipe assembly 800 of FIG. 4.

Referring to FIGS. 1 to 5, the battery pack may include a case 100. The case 100 may include a base plate 110. The base plate 110 may have a rectangular shape. The base plate 110 may have a flat shape. The base plate 110 may form an outer appearance of the battery pack 1000. The base plate 110 may provide an inner space of the battery pack 1000.

The case 100 may include a side wall 120. The side wall 120 may be installed, fastened, coupled, fixed or attached to the upper surface of the base plate 110. The side wall 120 may be composed of four pieces. The side wall 120 may be arranged along the periphery of the base plate 110. The side wall 120 may form the outer appearance of the battery pack 1000. The side wall 120 may provide an inner space.

The case 100 may include a pack cover 150. The pack cover 150 may have a rectangular plate shape. The pack cover 150 may have a flat plate shape. The pack cover 150 may form the outer appearance of the battery pack 1000. The pack cover 150 may cover the inner space of the battery pack 1000.

The battery pack 1000 may include a battery module 200, 210, 220. The battery module 200, 210, 220 may have a rectangular parallelepiped shape. The battery module 200, 210, 220 may be provided in plurality. The plurality of battery modules 200, 210, 220 may be positioned inside the case 100. The plurality of battery modules 200, 210, 220 may be installed, coupled, fastened, fixed, or attached to the base plate 110.

For example, the battery pack 1000 may include four battery modules 200, 210, 220. The plurality of battery modules 200, 210, 220 may be arranged along the front and rear direction or the X-axis direction.

Each of the battery modules 200, 210, 220 may include a plurality of battery cells. In this case, the battery cell may mean a secondary battery. In particular, the battery cell may be a secondary battery having a cylindrical shape. However, the battery cell is not limited to a cylindrical shape, and may have various shapes, such as a pouch shape or a rectangular parallelepiped shape.

The main port 130 may be provided in the side wall 120. The main port 130 may be provided as a pair. The main ports 130 may be configured with a port through which a cooling fluid flows in and a port through which a cooling fluid flows out. The cooling fluid may be supplied into the battery pack 1000 through the main port 130. The cooling fluid may be discharged to the outside of the battery pack 1000 through the main port 130.

Each of the battery modules 200, 210, 220 may have a port. Each of the battery modules 200, 210, 220 may have a port at the right side or in the +Y-axis direction. The port of each of the battery modules 200, 210, 220 may be communicated with the main port 130. A cooling fluid may be introduced into the battery pack 1000 through the main port 130 and may be introduced into the battery modules 200, 210, 220 through the ports of the battery modules 200, 210, 220. The cooling fluid may cool the battery cells located inside the battery modules 200, 210, 220.

The cooling fluid may flow out of the battery modules 200, 210, 220 through the ports of the battery modules 200, 210, 220.

The ports of the battery modules 200, 210, 220 may be connected with pipes. The ports of the battery modules 200, 210, 220 and the main port 130 may be connected with pipes.

The first battery module 210 may have a first port 211. The first port 211 may be provided at the right side of the first battery module 210 or in the +Y-axis direction. The first ports 211 may be configured as a pair. The first port 211 may have a port through which a cooling fluid flows in and a port through which a cooling fluid flows out.

The second battery module 220 may be located in front of the first battery module 210. Alternatively, the second battery module 220 may be located at one side of the first battery module 210. The second battery module 220 may have a second port 221. The second port 221 may be located at the right side of the second battery module 220 or in the +Y-axis direction. The second ports 221 may be configured as a pair. The second port 221 may have a port through which a cooling fluid flows in and a port through which a cooling fluid flows out.

The pipe assembly 800 may communicate the ports of neighboring battery modules 200, 210, 220. The pipe assembly 800 may communicate the first port 211 and the second port 221. The pipe assembly 800 may extend in the X-axis direction or the front and rear directions.

The pipe assembly 800 may include a holder 400. The holder 400 may be coupled, fastened, attached, fixed, or installed on the outer surface of the first port 211. The holder 400 may have a through hole 401.

The pipe assembly 800 may include a first connector 300. The first connector 300 may pass through the through hole 401. The first connector 300 and the holder 400 may be configured to be relatively movable. The first connector 300 may be coupled, installed, or inserted into the first port 211.

The pipe assembly 800 may include a fixing member 500. The fixing member 500 may couple, fasten, fix, or install the holder 400 to the first connector 300. The fixing member 500 may couple, fasten, fix, or install the first connector 300 to the holder 400.

Since the first connector 300 and the holder 400 are configured as separate parts, the depth at which the first connector 300 is inserted into the first port 211 may be adjustable. Since the depth at which the first connector 300 is inserted into the first port 211 is adjusted, the overall length of the pipe assembly 800 may be varied. Since the length of the pipe assembly 800 is varied, the installation of the pipe assembly 800 may be facilitated. Since the length of the pipe assembly 800 is varied, the connection between the first port 211 and the second port 221 may be facilitated. Since the length of the pipe assembly 800 is varied, less space may be required to connect the first port 211 and the second port 221.

Referring to FIGS. 1 to 5, the first connector 300 may include an insert portion 310. The insert portion 310 may extend toward the first port 211. The insert portion 310 may extend rearward or along the -X-axis direction. The insert portion 310 may be inserted into the first port 211. The depth at which the insert portion 310 is inserted into the first port 211 may be adjusted.

The first connector 300 may include a connection portion 320. The connection portion 320 may extend toward the second port 221. The connection portion 320 may extend forward or along the +X-axis direction. The connection portion 320 may be coupled, connected, communicated, inserted, or installed to the connection pipe 600.

The first connector 300 may include a fixing portion 330. The fixing portion 330 may be located between the connection portion 320 and the insert portion 310. The fixing portion 330 may have a larger diameter than the connection portion 320. The fixing portion 330 may have a larger diameter than the insert portion 310. The fixing portion 330 and the connection portion 320 may be formed as one piece. The fixing portion 330 and the insert portion 310 may be formed as one piece. The fixing portion 330 may function as a stopper. The fixing portion 330 may limit the depth to which the insert portion 310 is inserted into the first port 211. The fixing portion 330 may limit the depth to which the connection portion 320 is inserted into the connection pipe 600.

The fixing portion 330 may have a first fixing groove 331. The first fixing groove 331 may extend along the periphery of the fixing portion 330. The first fixing groove 331 may be formed on the outer surface of the first connector 300.

The holder 400 may have a second fixing groove 420 on the outer surface. The second fixing groove 420 may penetrate the holder 400. The second fixing groove 420 may be arranged to face the first fixing groove 331.

The holder 400 may include a first hook 410. The first hook 410 may be installed, coupled, fastened, fixed, or assembled to the outer surface of the first port 211. The first hook 410 and the first port 211 may be hook-coupled.

The fixing member 500 may be inserted into the first fixing groove 331 and the second fixing groove 420. As the fixing member 500 is inserted into the first fixing groove 331 and the second fixing groove 420, the holder 400 and the first connector 300 may be coupled, installed, fastened, or fixed to each other. The fixing member 500 may extend along the periphery of the holder 400. The fixing member 500 may extend along the second fixing groove 420. The fixing member 500 may extend along the periphery of the fixing portion 330. The fixing member 500 may extend along the periphery of the first fixing groove 331.

Referring to FIGS. 1 to 5, the pipe assembly 800 may include a second connector 700. The second connector 700 may be installed, coupled, fastened, fixed, connected, or communicated with the second port 221. The second connector 700 may have a second hook 720. The second hook 720 may be installed, coupled, fastened, fixed, or assembled to the outer surface of the second port 221.

The connection pipe 600 may be coupled, connected, communicated, inserted, or installed to the second connector 700. The connection pipe 600 may be coupled, connected, communicated, inserted, or installed to the connection portion 320. The connection pipe 600 may extend along the front and rear direction or the +X-axis direction. The connection pipe 600 may connect or communicate the first connector 300 and the second connector 700.

The connection pipe 600 may be configured as a corrugated tubing. The corrugated tubing may have elasticity. The corrugated tubing may be deformed so that the first connector 300 and the second connector 700 may be easily connected. The corrugated tubing may be deformed so that the first connector 300 and the second connector 700 may be easily connected even if the first port 211 and the second port 221 are misaligned.

The connection pipe 600 and the second connector 700 may be configured as one piece. If the first port 211 and the second port 221 are located close to each other, the first port 211 and the second port 221 may be easily connected to the connection pipe 600 and the second connector 700 configured as one piece. Alternatively, if the alignment of the first port 211 and the second port 221 is highly accurate, the first port 211 and the second port 221 may be easily connected to the connection pipe 600 and the second connector 700 configured as one piece.

The first sealing ring 311 may be provided to the periphery of the insert portion 310. The first sealing ring 311 may be provided in plurality. The first sealing ring 311 may seal the insert portion 310 and the first port 211 from each other.

The second sealing ring 710 may be provided to the periphery of the second connector 700. The second sealing ring 710 may be provided in plurality. The second sealing ring 710 may seal the second connector 700 and the second port 221 from each other.

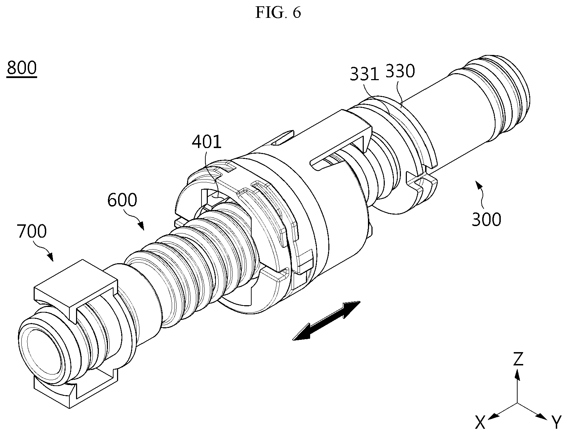

FIG. 6 is a drawing showing the movement of a holder 400 of the pipe assembly 800 of FIG. 3. Referring to FIG. 6, before the fixing member 500 is fixed to the first fixing groove 331 or the second fixing groove 420, the holder 400 may be configured to be movable along the longitudinal direction of the first connector 300. The holder 400 may be configured to be movable along the longitudinal direction of the connection pipe 600. The first connector 300 may pass through the through hole 401 of the holder 400. The connection pipe 600 may pass through the through hole 401 of the holder 400.

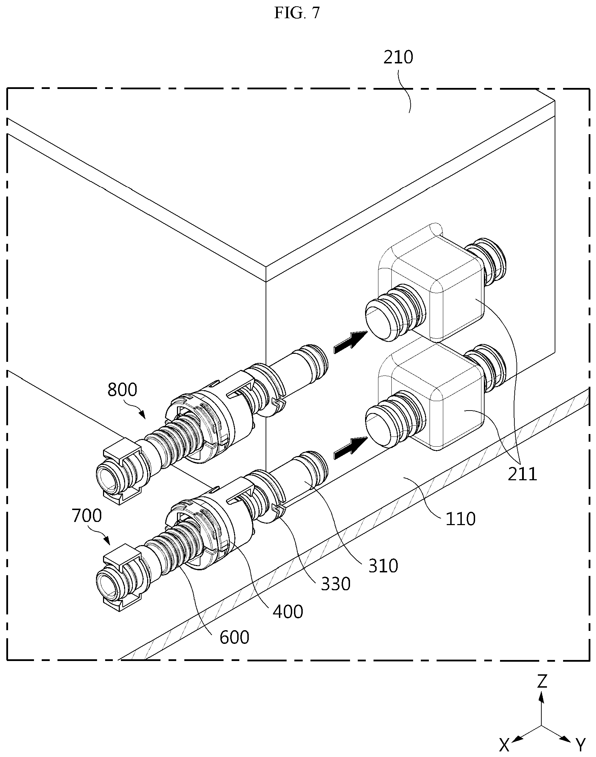

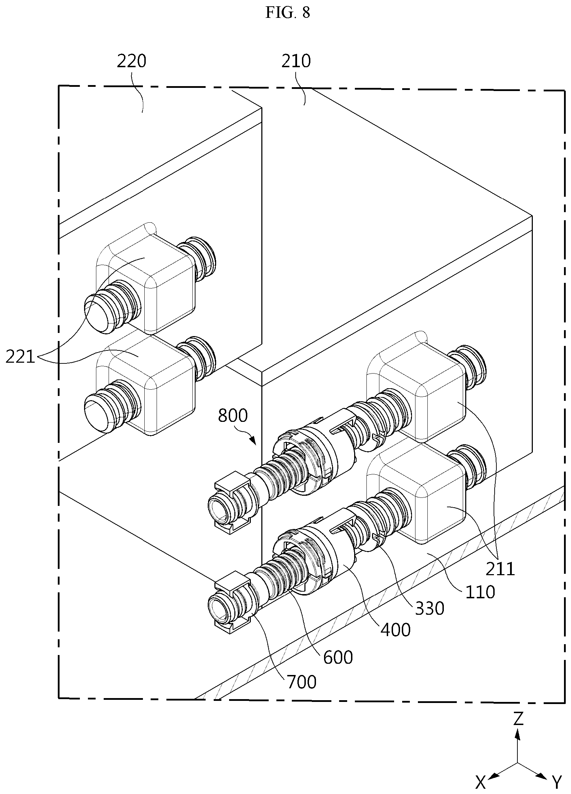

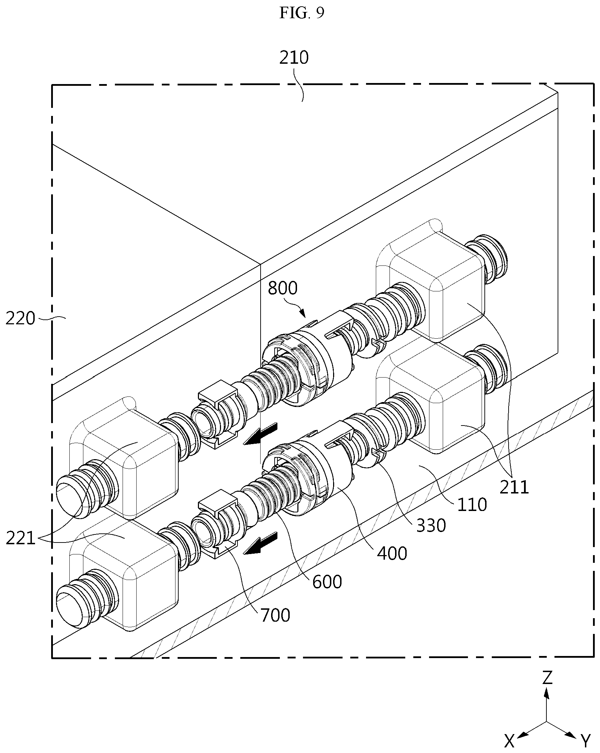

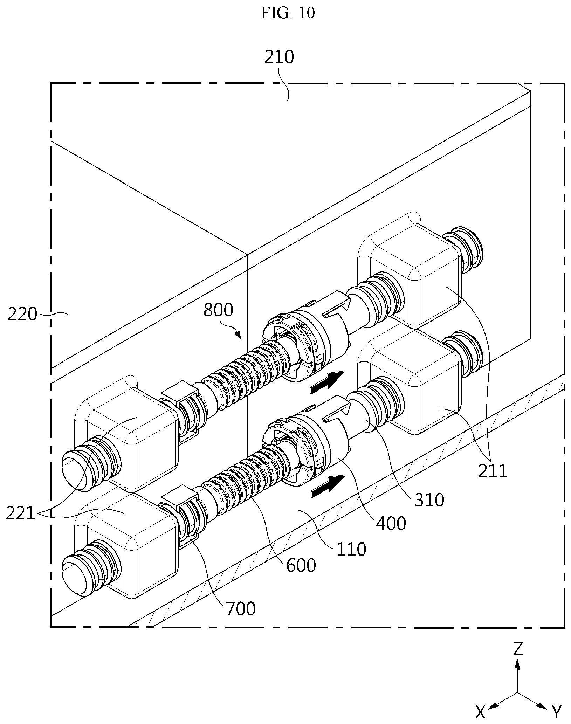

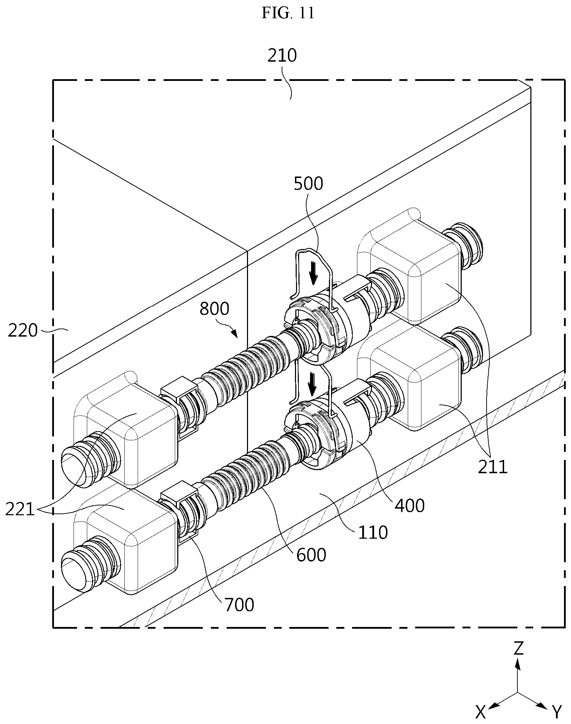

FIG. 7 is a drawing showing the coupling of the first battery module 210 and the pipe assembly 800. FIG. 8 is a drawing showing the installation of a second battery module 220. FIG. 9 is a drawing showing the coupling of the second battery module 220 and the pipe assembly 800. FIG. 10 is a drawing showing the coupling of the first battery module 210 and the holder 400. FIG. 11 is a drawing showing the coupling of a first connector 300 and the holder 400.

FIGS. 7 to 11 are drawings showing the installation of the first battery module 210 and the second battery module 220 and the coupling of the pipe assembly 800 as examples. FIGS. 7 to 11 may sequentially show the installation of the first battery module 210 and the second battery module 220 and the coupling of the pipe assembly 800.

Referring to FIG. 7, the first battery module 210 may be installed on the base plate 110. The pipe assembly 800 may be connected to the first port 211. The insert portion 310 may be deeply inserted into the first port 211. At this time, the holder 400 of the pipe assembly 800 may remain in a movable state without being fixed to the fixing portion 330.

Referring to FIGS. 7 and 8, the second battery module 220 may be installed on the base plate 110. As the insert portion 310 is deeply inserted into the first port 211, a space for installing the second battery module 220 may be secured. Alternatively, as the insert portion 310 is deeply inserted into the first port 211, the second battery module 220 and the pipe assembly 800 may be prevented from contacting or interfering with each other.

Referring to FIG. 9, if the second battery module 220 is installed, the pipe assembly 800 and the second port 221 may be spaced apart. Alternatively, if the second battery module 220 is installed, the second connector 700 and the second port 221 may be spaced apart.

Referring to FIGS. 9 and 10, the second connector 700 and the second port 221 may be coupled, fastened, connected, or communicated as the insert portion 310 moves forward or in the +X axis. Alternatively, as the depth at which the insert portion 310 is inserted into the first port 211 decreases, the second connector 700 and the second port 221 may be coupled, fastened, connected, or communicated. The second hook 720 may be installed, coupled, fastened, fixed, or assembled to the outer surface of the second port 221. The second hook 720 and the second port 221 may be hook-coupled.

Referring to FIG. 10, if the second connector 700 and the second port 221 are coupled, the holder 400 may be moved backward or in the -X-axis direction. The holder 400 may be moved to a position where the second fixing groove 420 and the first fixing groove 331 are aligned. If the second fixing groove 420 and the first fixing groove 331 are aligned, the first hook 410 and the first port 211 may be fastened.

Alternatively, the holder 400 may be moved to a position where the first fixing groove 331 and the second fixing groove 420 face each other. If the first fixing groove 331 and the second fixing groove 420 are positioned to face each other, the first hook 410 and the first port 211 may be fastened.

Referring to FIG. 11, if the first hook 410 and the first port 211 are coupled, the fixing member 500 may be inserted into the first fixing groove 331 and the second fixing groove 420. The first connector 300 and the holder 400 may be fastened due to the fixing member 500. As the fixing member 500 is inserted into the first fixing groove 331 and the second fixing groove 420, the connection of the first port 211 and the second port 221 may be completed.

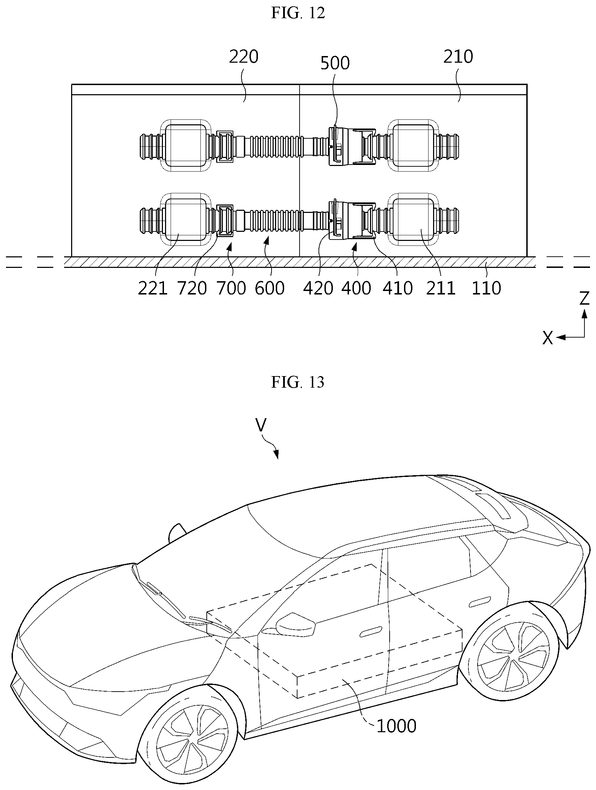

FIG. 12 is an enlarged drawing showing the pipe assembly 800. Referring to FIG. 12, the pipe assembly 800 may improve space efficiency by connecting the first port 211 and the second port 221 in an approximately straight line. In addition, the pipe assembly 800 may improve the energy density of the battery pack 1000 by occupying less space.

The battery pack 1000 according to the present disclosure may further include various components, such as various components of the battery pack 1000 known at the time of filing of this application, including a BMS, a bus bar, a relay, a current sensor, etc., in addition to than the battery modules 200, 210, 220 and the pipe assembly 800.

FIG. 13 is a drawing showing a vehicle V according to an embodiment of the present disclosure. Referring to FIG. 13, the vehicle V according to an embodiment of the present disclosure may include the battery pack 1000 of the present disclosure. The battery pack 1000 according to the present disclosure may be applied to a vehicle V, such as an electric vehicle V or a hybrid electric vehicle V. That is, the vehicle V according to the present disclosure may include the battery pack 1000 according to the present disclosure. In addition, the vehicle V according to the present disclosure may further include various other components included in the vehicle V in addition to the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a first battery module having a first port;
a second battery module located at one side of the first battery module and having a second port; and
a pipe assembly configured to communicate the first port and the second port,
wherein the pipe assembly includes:
a holder coupled to an outer surface of the first port and having a through hole;
a first connector passing through the through hole and inserted into the first port; and
a fixing member configured to fix the holder to the first connector.

2. The battery pack according to claim 1,
wherein the holder has a hook, and
wherein the holder and the first port are hook-coupled.

3. The battery pack according to claim 1,
wherein the first connector has a first fixing groove provided on an outer surface thereof, and
wherein the holder has a second fixing groove provided on an outer surface thereof and facing the first fixing groove.

4. The battery pack according to claim 3,
wherein the fixing member is inserted into the first fixing groove and the second fixing groove.

5. The battery pack according to claim 3,
wherein the pipe assembly includes:
a second connector coupled to the second port; and
a connection pipe configured to communicate the second connector and the first connector.

6. The battery pack according to claim 5,
wherein the first connector includes:
an insert portion inserted into the first port; and
a connection portion communicating with the connection pipe,
wherein the first fixing groove is located between the insert portion and the connection portion.

7. The battery pack according to claim 5,
wherein the connection pipe is configured as a corrugated tubing.

8. The battery pack according to claim 5,
wherein the second connector and the connection pipe are formed as one piece.

9. The battery pack according to claim 6,
wherein the first connector further includes a sealing ring provided on an outer surface of the insert portion.

10. A vehicle comprising the battery pack according to any one of claims 1 to 9.
